# FASCICULE DE BREVET EUROPEEN

(11) **EP 3 528 111 B1**
(45) Date de publication et mention de la délivrance du brevet: **02.10.2024**
(21) Numéro de dépôt: 19157608.1
(22) Date de dépôt: 17.02.2019
(51) Int. Cl.: G06F 8/74

(54) **SYSTEME ET PROCEDE INFORMATIQUE D'ANALYSE DE PERFORMANCE D'UNE APPLICATION REALISANT DES APPELS DE FONCTION DE COMMUNICATION ENTRE PLUSIEURS PROCESSUS**
IT-SYSTEM UND -VERFAHREN ZUR ANALYSE DER LEISTUNG EINER ANWENDUNG, DIE FUNKTIONSAUFRUFE ZUR KOMMUNIKATION ZWISCHEN VERSCHIEDENEN PROZESSEN AUSFÜHRT
COMPUTER SYSTEM AND METHOD FOR ANALYSING THE PERFORMANCE OF AN APPLICATION MAKING CALLS FOR COMMUNICATION FUNCTION BETWEEN A PLURALITY OF PROCESSES

(30) Priorité: 19.02.2018 FR 1851375
(43) Date de publication de la demande: 21.08.2019
(73) Titulaire: Bull SAS, 78340 Les Clayes-sous-Bois (FR); Commissariat à l'énergie atomique et aux énergies alternatives, 75015 Paris (FR)
(72) Inventeur: PETIT, Enguerrand, 38650 TREFFORT (FR); MAZAURIC, Cyril, 38410 SAINT MARTIN D'URIAGE (FR); PAJOT, Benjamin, 38610 GIERES (FR); VIGOUROUX, Xavier, 38320 BRIE-ET-ANGONNES (FR)
(74) Mandataire: Novagraaf Technologies

(56) Documents cités:
- US-A1- 2015 143 339

## Description

La présente invention concerne un système et un procédé informatique d'analyse de performance d'une application réalisant des appels de fonction de communication entre plusieurs processus. Elle trouve notamment une application pour l'analyse de performance et la schématisation des communications inter-processus dans une application informatique en environnement de calcul parallèle et distribué, par exemple lorsque la communication entre processus est implémentée selon la norme « Message Passing Interface » ou MPI.

La demande de brevet publiée sous le numéro US2015/0143339A1 divulgue une méthode d'analyse d'un programme utilisant un graphe d'appel dont les noeuds correspondent à des fonctions.

L'analyse des performances d'une application en environnement de calcul parallèle et distribué est une tâche complexe. On s'intéresse notamment à la communication inter-processus à travers la norme MPI. La norme MPI, implémentée sous forme de bibliothèques de fonctions, permet un interfaçage avec l'application, par l'intermédiaire de bibliothèques spécifiques s'interposant entre cette application et la bibliothèque MPI.

Ceci permet de récolter des informations telles que :
- le temps par processus et le temps global de communication,
- le nombre de messages ainsi que la taille des messages envoyés et reçus,
- les différents appels de fonction MPI,
- la durée par appel de fonction MPI,
- le moment où intervient cet appel.

Ces différentes informations sont utiles à la fois pour obtenir des statistiques globales et locales à chaque processus, et pour tracer une suite temporelle d'appels de fonctions (communément appelée ligne de temps ou « timeline »). Cette suite temporelle est cependant compliquée à générer, à interpréter, et à utiliser.

Un des buts de l'invention est donc de résoudre notamment le problème précité. Ainsi, l'invention a notamment pour objectif de proposer un procédé et un système facilitant l'analyse de performance d'une application utilisant la communication inter-processus en environnement de calcul parallèle et distribué.

L'invention est définie par l'objet des revendications annexées.

Suivant certains modes de mise en oeuvre, le procédé comprend en outre une ou plusieurs des caractéristiques suivantes, prise(s) isolément ou suivant toutes les combinaisons techniquement possibles :
- la détection de motifs et de successions de motifs comprend une détermination à partir des informations collectées, pour chaque appel d'une fonction de communication, de la fonction appelée, du processus receveur, du processus émetteur, et/ou du moment de l'appel ;
- la détermination effectuée pour chaque appel est réalisée au fur et à mesure de l'exécution de l'application;
- la grammaire est stockée dans une mémoire, et l'étape de détection de la répétition des motifs et des successions de motifs est réalisée par parcours de la grammaire une fois l'exécution de l'application terminée ;
- l'étape de collecte d'informations comprend une étape de génération d'un fichier trace dans lequel sont stockés, pour chaque appel d'une fonction de communication et de façon ordonnée selon le moment de l'appel, la fonction appelée, le processus receveur, le processus émetteur, et la détermination de la fonction appelée, du processus receveur, du processus émetteur, et/ou du moment de l'appel est réalisée dans le fichier trace, une fois l'exécution de l'application terminée ;
- chaque motif est identifié par le nom de la première fonction appelée dans ce motif, et chaque succession de motifs est identifiée par le nom de la première fonction appelée dans le premier motif de cette succession de motifs ;
- les appels de fonctions sont réalisés, par exemple, selon un protocole de type « Message Passing Interface » ou MPI, ou de type « Open Multi-Processing » ou OpenMP.

Ainsi, le procédé et le système de l'invention permettent de générer facilement la ligne de temps, et de simplifier cette ligne de temps, en détectant les boucles d'appels de fonctions de communication entre processus, c'est-à-dire une succession d'appels hiérarchiques qui se répète.

Pour ce faire, les appels de fonction sont examinés, au fil de l'eau lors de l'exécution de l'application, ou en utilisant un fichier trace qui enregistre les appels.

Ces appels forment des motifs complexes qui sont détectés et enregistrés, sans perte d'information. Cette détection de motifs est réalisée sur chaque processus, mais également entre processus, ce qui permet d'obtenir une représentation graphique encore plus allégée et claire de tous les schémas de communication en un seul graphique.

Les caractéristiques et avantages de l'invention apparaitront à la lecture de la description qui va suivre, donnée uniquement à titre d'exemple, et non limitative, en référence aux figures annexées suivantes :
- figure 1 : représentation algorithmique d'un exemple application réalisant des appels de fonctions de communication inter-processus, selon la norme MPI ;
- figure 2 : représentation d'un exemple de fichier trace brut généré au cours de l'exécution de l'application de la figure 1 ;
- figure 3 : représentation d'un exemple de fichier trace compressé correspondant à l'exécution de l'application de la figure 1, généré selon le procédé de l'invention ;
- figure 4 : représentation schématique d'un graphe généré selon le procédé de l'invention, à partir de l'application de la figure 1.

Dans la suite de la description, un exemple de mise en oeuvre du procédé de l'invention est présenté dans le contexte de l'utilisation de la norme MPI.

Dans un programme, ou une application, parallèle et distribué, les communications sont généralement réalisées entre un processus et ses voisins proches (distance égale à 1), à chaque pas de temps.

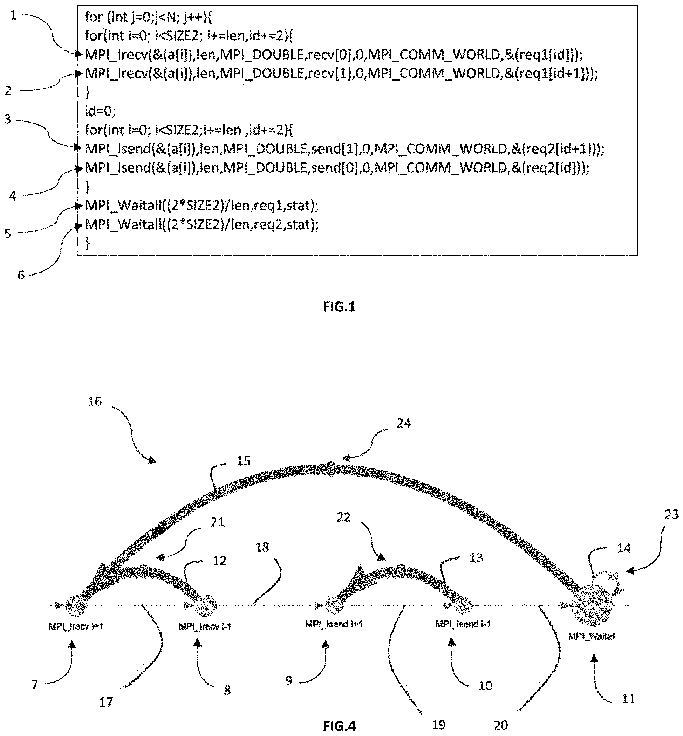

Un exemple d'application, représenté sous la forme d'un algorithme, est représenté à la figure 1. Dans cet exemple, un certain nombre d'opérations correspondant à des appels de fonctions MPI sont répétées N fois. Plus précisément, il s'agit d'opérations d'envoi aux, et de réception depuis les, processus de distance égale à 1 (rang du processus émetteur, respectivement récepteur, plus ou moins 1).

Dans cet exemple, 6 appels 1 à 6 de fonction de communication sont effectués et répétés, à savoir :
- un appel 1 à la fonction de réception MPI_Irecv pour réception par le processus de rang courant d'une information de la part d'un processus de rang courant plus un (distance égale à un),
- un appel 2 à la fonction de réception MPI_Irecv pour réception par le processus de rang courant d'une information de la part d'un processus de rang courant moins un (distance égale à un),
- un appel 3 à la fonction d'envoi MPI_Isend pour envoi par le processus de rang courant d'une information à un processus de rang courant plus un (distance égale à un),
- un appel 4 à la fonction d'envoi MPI_Isend pour envoi par le processus de rang courant d'une information à un processus de rang courant moins un (distance égale à un),
- deux appels 5 et 6 à la fonction MPI_Waitall pour temporisation, le temps que toutes les communications en cours soient terminées.

Dans cet exemple, la syntaxe utilisée pour les appels de fonction de communication est celle de la bibliothèque de fonctions MPI en langage C.

Ainsi, selon le procédé de l'invention, l'analyse de performance de l'application représentée algorithmiquement à la figure 1, consiste tout d'abord à détecter des motifs, soit des appels parmi les appels 1 à 6, ou une succession d'au moins deux appels parmi les appels 1 à 6, et leurs répétitions éventuelles.

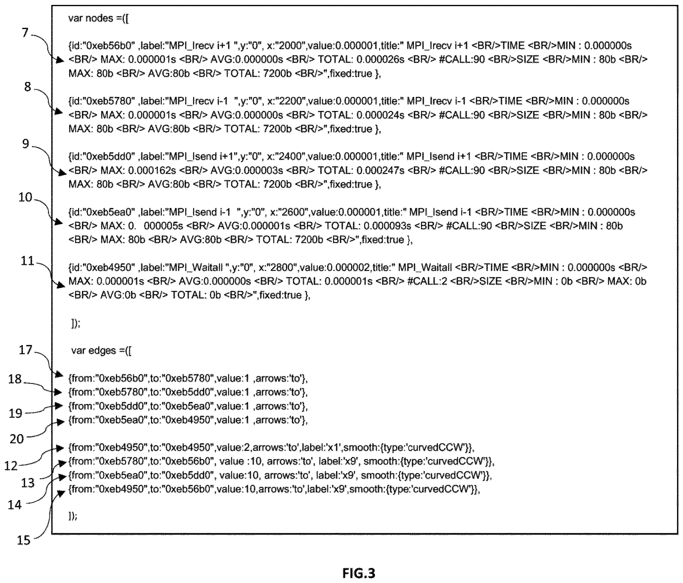

Le procédé comprend ainsi une étape de détection de la répétition des motifs et successions de motifs, ces motifs étant représentés sur un exemple avec les références 7 à 11 sur les figures 3 et 4 qui seront décrites plus loin de manière plus détaillée.

Chaque motif 7 à 11 détecté est identifié par un identifiant unique, qui peut par exemple contenir le nom de la première fonction appelée dans le motif 7 à 11, et chaque succession de motifs détectée est identifiée par un identifiant unique, qui peut par exemple contenir le nom de la première fonction appelée dans le premier motif de la succession de motifs.

Cette étape de détection des motifs 7 à 11 permet de former une grammaire, à partir de laquelle, en la parcourant, les répétitions de motifs sont détectées à leur tour.

A partir de l'examen des appels 1 à 6, un fichier trace compressé est généré, tel que représenté sur la figure 3, dans lequel sont stockés les motifs 7 à 11 et les successions de motifs 7 à 11, ainsi que leurs nombres respectifs de répétition référencés 12 à 15.

Plus précisément, pour la détection de la répétition de motifs 7 à 11 et de la répétition de successions de motifs 7 à 11, on examine, pour chaque appel 1 à 6 d'une fonction de communication, la fonction appelée, le processus receveur, le processus émetteur, et le moment de l'appel.

Ces appels 1 à 6 peuvent être examinés directement au fil de l'eau lors de l'exécution de l'application, c'est-à-dire en traitant les appels dès leur achèvement.

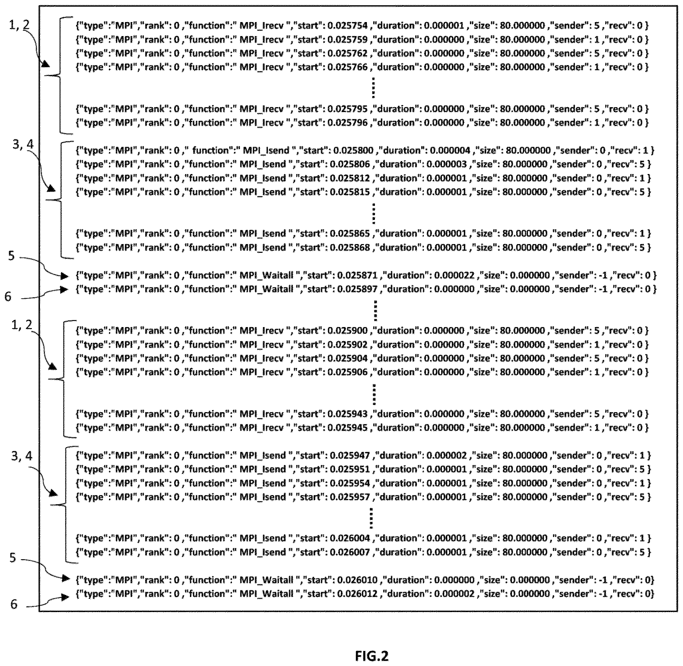

Alternativement, on peut utiliser un fichier trace qui enregistre ces appels 1 à 6, tel que représenté sur la figure 2. Précisément, pour chaque appel 1 à 6, sont notamment stockés, de façon ordonnée selon le moment de l'appel, la fonction appelée, le processus receveur, le processus émetteur. L'examen de chaque appel 1 à 6 peut alors être réalisé en différé dans ce fichier trace.

Pour la détection des motifs 7 à 11 et de leurs répétitions, on peut utiliser un algorithme de type compression de données sans perte d'information et sans perte de séquentialité, tel qu'un algorithme de type Sequitur modifié.

Sequitur est un algorithme qui permet une compression hiérarchique de texte, en inférant une structure hiérarchique à partir d'une séquence de symboles discrets, par remplacement des phrases répétées détectées par une règle grammaticale qui génère la phrase, et en continuant de manière récursive (voir : Nevill-Manning, C.G. and Witten, I.H. (1997) " Identifying Hierarchical Structure in Sequences: A linear-time algorithm, " Journal of Artificial Intelligence Research, 7, 67-82).

Le résultat de l'exécution d'un tel algorithme peut être donné sous la forme d'une représentation hiérarchique de la séquence originale, qui offre des informations sur sa structure lexicale.

Mais alors que Sequitur se base sur des symboles simples comme des lettres ou des chiffres, le procédé de l'invention est plus complexe, puisqu'un élément terminal de la structure hiérarchique, correspondant à un motif 7 à 11, est composé à la fois de mots, d'entiers et de nombre réels.

Pour les besoins du procédé de l'invention, on se limite cependant à un sousensemble d'information, à savoir : la fonction (son nom), le rang de l'appelant, le receveur, l'émetteur, le moment (définit par exemple par le numéro de ligne dans le fichier trace).

On se recentre ainsi sur la séquence d'instructions (ou d'appels), tout en conservant les notions d'émetteur, de receveur, d'appelant, ainsi que la notion de temporalité par la structure même du fichier trace puisque les appels sont ordonnés chronologiquement.

Les chaines de caractères correspondant aux appels de fonction, dans le fichier trace ou au fil de l'eau, sont donc analysées pour former le fichier trace compressé représenté à la figure 3, comprenant les symboles terminaux 7 à 11 correspondant aux motifs 7 à 11, et les boucles 12 à 15 représentants les répétitions 12 à 15 d'un ou plusieurs symboles terminaux ou motifs 7 à 11.

Le fichier trace compressé comprend également la définition des liens chronologiques 17 à 20 entre les différents motifs 7 à 11.

Cette trace compressée permet de générer un graphe pour visualiser l'enchaînement des motifs 7 à 11 et les différentes répétitions 12 à 15.

Ainsi, à partir de la trace compressée correspondant à l'exécution de l'application représentée sur la figure 1, le graphe 16 de la figure 4 est généré.

Ce graphe 16 contient des noeuds 7 à 11 représentent les motifs 7 à 11 ordonnés selon la chronologie des appels 1 à 6 des fonctions formant ces motifs 7 à 11.

Par ailleurs, le graphe 16 comprend deux catégories d'arrêtes 12 à 20 reliant certains des noeuds 7 à 11 entre eux.

Dans la première catégorie d'arrêtes, chaque arrête 17 à 20 relie deux noeuds 7 à 11 correspondant à deux motifs 7 à 11 successifs selon l'ordre chronologique des appels 1 à 6 des fonctions formant chacun des deux motifs 7 à 11 successifs.

Ainsi :
- l'arrête 17 relie les noeuds 7 et 8, en direction du noeud 8,
- l'arrête 18 relie les noeuds 8 et 9, en direction du noeud 9,
- l'arrête 19 relie les noeuds 9 et 10, en direction du noeud 10,
- l'arrête 20 relie les noeuds 10 et 11, en direction du noeud 11.

Dans la deuxième catégorie d'arrêtes, chaque arrête 12 à 15, soit relie deux noeuds 7 à 11 correspondant respectivement au début et la fin d'une succession de motifs 7 à 11 qui se répète lors de l'exécution de l'application et/ou dans le fichier trace, soit forme une boucle 14 sur un noeud 11 qui se répète lors de l'exécution de l'application et/ou dans le fichier trace.

Chaque arrête 12 à 15 de cette deuxième catégorie d'arêtes est affectée d'un poids 21 à 24 correspondant au nombre de répétition 21 à 24 de la succession de motifs 7 à 11 correspondante, ou du motif 11 correspondant.

Dans l'exemple de graphe 16 représenté sur la figure 2, le paramètre N de l'application représenté sur la figure 1 est égal à 9.

Ainsi :
- l'arrête 12 relie les noeuds 7 et 8, en direction du noeud 7, et est affectée du poids 21 égal à 9, pour matérialiser les 9 répétitions des appels successifs des fonctions dans les motifs 7 et 8,
- l'arrête 13 relie les noeuds 9 et 10, en direction du noeud 9, et est affectée du poids 22 égal à 9, pour matérialiser les 9 répétitions des appels successifs des fonctions dans les motifs 9 et 10,
- l'arrête 14 relie le noeud 11 avec lui-même, et est affectée du poids 23 égal à 9, pour matérialiser les 9 répétitions des appels successifs des fonctions dans le motif 11,
- l'arrête 15 relie les noeuds 7 et 11, en direction du noeud 7, et est affectée du poids 24 égal à 9, pour matérialiser les 9 répétitions des appels successifs des fonctions dans les motifs 7 à 11.

Pour générer le fichier trace compressé à partir du fichier trace, et pouvoir ensuite générer le graphe 16, on effectue le parcours en profondeur de la structure hiérarchique correspondant à la grammaire obtenue, et on compare les différents symboles nonterminaux afin de les regrouper s'ils sont équivalant, tout en comptant le nombre de fois où ils se répètent aux différentes profondeurs de la grammaire. La profondeur de la grammaire correspond au nombre de symboles non terminaux avant un symbole terminal dans la structure hiérarchique obtenue.

Différents graphes sont ainsi obtenus pour les différents processus. On compare alors ces graphes pour former des groupes de processus. Un groupe est composé de tous les processus ayant un graphe identique. A la fin de ce processus, un seul graphe est conservé par groupe, ce qui permet d'alléger encore le modèle et de n'afficher qu'un graphe par groupe de processus.

Comme présenté plus haut, un graphe 16 se compose de noeuds 7 à 11 et d'arrêtes directionnelles 12 à 20 qui représentent le passage d'un appel à l'autre ou d'une succession d'appels à une autre. Les arrêtes 12 à 15 correspondant aux boucles 12 à 15 sont affectées de poids 21 à 24 représentant les nombre de passages respectifs par ces arrêtes.

Une fois le graphe 16 obtenu, on récupère toutes les données exclues lors de la compression pour reconsidérer toutes les notions de temps, durées et de tailles des messages transmis. En récupérant ces données, il est possible de calculer pour chaque boucle, et / ou pour chaque appel, des données statistiques de temps et / ou de tailles de messages transmis. Il est également possible de détecter les désynchronisations de processus au sein d'un même groupe.

A partir de ces données, on affecte un poids à chaque noeud, proportionnel au temps passé dans l'appel de fonction ou la succession d'appels correspondant au noeud concerné. Un noeud peut également être associé à toutes les données statistiques relatives à l'appel ou la succession d'appels correspondant au noeud concerné pour les différents processus d'un groupe.

Une analyse des performances de l'application est effectuée à partir du graphe, des poids affectés aux noeuds et des poids affectés aux arêtes. L'analyse des performances de l'application peut être effectuée à partir des données statistiques associées aux noeuds.

Pour la mise en oeuvre du procédé, un système informatique est utilisé, qui comprend un processeur et une mémoire. Dans la mémoire sont stockées des instructions de programme qui, lorsqu'elles sont exécutées par le processeur, mettent en oeuvre le procédé de l'invention.

La présente description est donnée à titre d'exemple et n'est pas limitative de l'invention.

En particulier, l'invention ne se limite pas à des applications utilisant des fonctions de communication inter-processus de type MPI. Elle s'étend à d'autres bibliothèques de fonctions, telles que les fonctions de type « Open Multi-Processing » ou OpenMP par exemple. Elle s'étend aussi à l'analyse des appels de fonctions d'entrée-sortie (lectureécriture). Plus généralement elle s'étend à l'analyse d'applications réalisant des appels de fonctions dont on est en mesure d'extraire les informations de façon chronologique, depuis un fichier trace ou au fil de l'exécution de l'application en question.

## Revendications

1. Procédé informatique d'analyse de performance d'une application, ladite application réalisant des appels (1 à 6) de fonctions de communication entre plusieurs processus, un appel (1 à 6) ou une succession d'au moins deux appels (1 à 6) formant un motif (7 à 11), le procédé étant mis en oeuvre par un système informatique d'analyse de performance et comprenant
une étape de collecte d'informations relatives aux appels (1 à 6) de fonction, et
une étape de compression des informations collectées, ladite étape de compression comprenant :
- une étape de détection, à partir des informations collectées, de motifs (7 à 11) et de successions de motifs (7 à 11), pour former une grammaire dans laquelle chaque motif (7 à 11) et chaque succession de motifs (7 à 11) sont identifiés par un identifiant unique,
- une étape de détection, dans la grammaire, de la répétition de motifs (7 à 11) et de successions de motifs (7 à 11),
- une étape de génération d'un fichier trace compressé dans lequel sont stockés les motifs (7 à 11) et les successions de motifs (7 à 11), ainsi que leurs nombres respectifs de répétition (12 à 15),
- une génération d'un graphe (16) à partir du fichier trace compressé, dont les noeuds (7 à 11) représentent les motifs (7 à 11) ordonnés selon la chronologie des appels (1 à 6) des fonctions formant lesdits motifs (7 à 11),
le graphe (16) comprenant une première catégorie d'arrêtes, chaque arrête (17 à 20) de ladite première catégorie d'arrêtes reliant deux noeuds (7 à 11) correspondant à deux motifs (7 à 11) successifs selon l'ordre chronologique des appels (1 à 6) des fonctions formant chacun des deux motifs (7 à 11) successifs ;
le graphe (16) comprenant une deuxième catégorie d'arrêtes, chaque arrête (12 à 15) de ladite deuxième catégorie d'arrêtes reliant deux noeuds (7 à 11) correspondant respectivement au début et la fin d'une succession de motifs (7 à 11) qui se répète dans le fichier trace, ou formant une boucle (14) sur un noeud (11) qui se répète dans le fichier trace, chaque arrête (12 à 15) de ladite deuxième catégorie d'arêtes étant affectée d'un poids (21 à 24) correspondant au nombre de répétition (21 à 24) de la succession de motifs (7 à 11) correspondante ou du motif (11) correspondant ;
- une affectation à chaque noeud du graphe d'un poids proportionnel au temps passé dans l'appel de fonction ou la succession d'appels correspondant au noeud concerné ;
- une analyse des performances de l'application sur la base du graphe et des poids affectés aux noeuds et aux arêtes.

2. Procédé selon la revendication 1, dans lequel l'étape de détection de motifs (7 à 11) et de successions de motifs (7 à 11) comprend une détermination à partir des informations collectées, pour chaque appel (1 à 6) d'une fonction de communication, de la fonction appelée, du processus receveur, du processus émetteur, et du moment de l'appel.

3. Procédé selon la revendication 2, dans lequel la détermination est réalisée au fur et à mesure de l'exécution de l'application.

4. Procédé selon l'une quelconque des revendications précédentes, dans lequel la grammaire est stockée dans une mémoire, et l'étape de détection de la répétition des motifs (7 à 11) et des successions de motifs (7 à 11) est réalisée par parcours de la grammaire une fois l'exécution de l'application terminée.

5. Procédé selon la revendication 2, dans lequel l'étape de collecte d'informations comprend une étape de génération d'un fichier trace dans lequel sont stockés, pour chaque appel (1 à 6) d'une fonction de communication et de façon ordonnée selon le moment de l'appel, la fonction appelée, le processus receveur, le processus émetteur, et la détermination de la fonction appelée, du processus receveur, du processus émetteur, et/ou du moment de l'appel est réalisée dans le fichier trace, une fois l'exécution de l'application terminée.

6. Procédé selon l'une quelconque des revendications précédentes, dans lequel chaque motif (7 à 11) est identifié par le nom de la première fonction appelée dans ce motif (7 à 11), et chaque succession de motifs (7 à 11) est identifiée par le nom de la première fonction appelée dans le premier motif (7 à 11) de cette succession de motifs (7 à 11).

7. Système informatique d'analyse de performance d'une application réalisant des appels (1 à 6) de fonctions de communication entre plusieurs processus, le système comprenant un processeur et une mémoire, ladite mémoire comprenant des instructions de programme qui, lorsqu'elles sont exécutées par ledit processeur, amènent ledit système à mettre en oeuvre le procédé selon l'une quelconque des revendications précédentes.

## Patentansprüche

1. Computerverfahren zum Analysieren der Leistung einer Anwendung, wobei die Anwendung Aufrufe (1 bis 6) von Funktionen der Kommunikation zwischen mehreren Prozessen ausführt, ein Aufruf (1 bis 6) oder eine Folge von mindestens zwei Aufrufen (1 bis 6) ein Muster bildet (7 bis 11), das Verfahren durch ein Computerleistungsanalysesystem implementiert wird und Folgendes umfasst:
einen Schritt des Erfassens von Informationen bezüglich der Funktionsaufrufe (1 bis 6) und
einen Schritt des Komprimierens der erfassten Informationen, wobei der Komprimierschritt Folgendes umfasst:
- einen Schritt des Erkennens von Mustern (7 bis 11) und Musterfolgen (7 bis 11) aus den erfassten Informationen, um eine Grammatik zu bilden, in der jedes Muster (7 bis 11) und jede Musterfolge (7 bis 11) durch eine eindeutige Kennung gekennzeichnet sind,
- einen Schritt des Erkennens der Wiederholung von Mustern (7 bis 11) und Musterfolgen (7 bis 11) in der Grammatik,
- einen Schritt des Erzeugens einer komprimierten Trace-Datei, in der die Muster (7 bis 11) und die Musterfolgen (7 bis 11) sowie die Anzahl ihrer jeweiligen Wiederholungen (12 bis 15) gespeichert sind,
- Generieren eines Graphen (16) aus der komprimierten Trace-Datei, dessen Knoten (7 bis 11) die Muster (7 bis 11) repräsentieren, die entsprechend der Chronologie der die Muster (7 bis 11) bildenden Aufrufe (1 bis 6) der Funktionen geordnet sind,
wobei der Graph (16) eine erste Kategorie von Kanten umfasst, wobei jede Kante (17 bis 20) der ersten Kategorie von Kanten zwei Knoten (7 bis 11) verbindet, die zwei Mustern (7 bis 11) entsprechen, die gemäß der chronologische Reihenfolge der Aufrufe (1 bis 6) der Funktionen, die jeweils zwei aufeinanderfolgende Muster (7 bis 11) bilden, aufeinanderfolgen;
wobei der Graph (16) eine zweite Kategorie von Kanten umfasst, wobei jede Kante (12 bis 15) der zweiten Kategorie von Kanten zwei Knoten (7 bis 11) verbindet, die jeweils dem Anfang und dem Ende einer Folge von Mustern (7 bis 11) entsprechen, die sich in der Trace-Datei wiederholt, oder eine Schleife (14) zu einem Knoten (11) bildet, der sich in der Trace-Datei wiederholt wird, wobei jeder Kante (12 bis 15) der zweiten Kategorie von Kanten eine Gewichtung (21 bis 24) zugewiesen wird, die der Anzahl der Wiederholungen (21 bis 24) der entsprechenden Musterfolge (7 bis 11) bzw. des entsprechenden Musters (11) entspricht;
- Zuweisen einer Gewichtung an jeden Knoten des Graphen, die proportional zur Zeit ist, die für den Funktionsaufruf oder die Abfolge von Aufrufen, die dem betreffenden Knoten entsprechen, aufgewendet wurde;
- Analysieren der Leistung der Anwendung basierend auf dem Graphen und den den Knoten und Kanten zugewiesenen Gewichtungen.

2. Verfahren nach Anspruch 1, wobei der Schritt des Erkennens von Mustern (7 bis 11) und Musterfolgen (7 bis 11) ein Bestimmen der aufgerufenen Funktion, des empfangenden Prozesses, des sendenden Prozesses und des Zeitpunkts des Anrufs für jeden Aufruf (1 bis 6) einer Kommunikationsfunktion aus den erfassten Informationen umfasst.

3. Verfahren nach Anspruch 2, wobei das Bestimmen im Laufe der Ausführung der Anwendung erfolgt.

4. Verfahren nach einem der vorhergehenden Ansprüche, wobei die Grammatik in einem Speicher gespeichert wird und der Schritt des Erkennens der Wiederholung von Mustern (7 bis 11) und Musterfolgen (7 bis 11) durch Durchlaufen der Grammatik, nachdem die Ausführung der Anwendung abgeschlossen wurde, erfolgt.

5. Verfahren nach Anspruch 2, wobei der Schritt des Erfassens von Informationen einen Schritt des Erzeugens einer Trace-Datei, in der für jeden Aufruf (1 bis 6) einer Kommunikationsfunktion und in geordneter Weise entsprechend des Zeitpunkts des Aufrufs die aufgerufene Funktion, der empfangende Prozess, der sendende Prozess gespeichert sind, umfasst und die Bestimmung der aufgerufenen Funktion, des empfangenden Prozesses, des sendenden Prozesses und/oder des Zeitpunkts des Aufrufs in der Trace-Datei erfolgt, nachdem die Ausführung der Anwendung beendet wurde.

6. Verfahren nach einem der vorhergehenden Ansprüche, wobei jedes Muster (7 bis 11) durch die Bezeichnung der ersten in diesem Muster (7 bis 11) aufgerufenen Funktion gekennzeichnet ist und jede Folge von Mustern (7 bis 11) durch die Bezeichnung der ersten Funktion, die im ersten Muster (7 bis 11) dieser Musterfolge (7 bis 11) aufgerufen wird, gekennzeichnet ist.

7. Computersystem zum Analysieren der Leistung einer Anwendung, die Funktionen der Kommunikation zwischen mehreren Prozessen aufruft (1 bis 6), wobei das System einen Prozessor und einen Speicher umfasst, wobei der Speicher Programmanweisungen umfasst, die bei ihrer Ausführung durch den Prozessor die das System veranlassen, das Verfahren nach einem der vorhergehenden Ansprüche zu implementieren.

## Claims

1. A computerized method for analyzing the performance of an application, said application making communication function calls (1 to 6) between a plurality of processes, a call (1 to 6) or a succession of at least two calls (1 to 6) forming a pattern (7 to 11), the method being implemented by a computerized performance analysis system and comprising
a step for collecting information relating to function calls (1 to 6), and
a step for compressing the collected information, said compression step comprising:
- a step for detecting patterns (7 to 11) and successions of patterns (7 to 11) from the collected information, to form a grammar wherein each pattern (7 to 11) and each succession of patterns (7 to 11) is identified by a unique identifier,
- a step for detecting the repetition of patterns (7 to 11) and successions of patterns (7 to 11) in the grammar,
- a step for generating a compressed log file wherein the patterns (7 to 11) and pattern successions (7 to 11) are stored, together with their respective numbers of repetitions (12 to 15),
- generating a graph (16) from the compressed log file, whereof the nodes (7 to 11) represent the patterns (7 to 11) ordered according to the chronology of the function calls (1 to 6) forming said patterns (7 to 11),
the graph (16) comprising a first category of edges, each edge (17 to 20) of said first category of edges connecting two nodes (7 to 11) corresponding to two successive patterns (7 to 11) according to the chronological order of the function calls (1 to 6) forming each of the two successive patterns (7 to 11);
the graph (16) comprising a second category of edges, each edge (12 to 15) of said second category of edges connecting two nodes (7 to 11) corresponding respectively to the beginning and end of a succession of patterns (7 to 11) which is repeated in the log file, or forming a loop (14) on a node (11) which repeats in the log file, each edge (12 to 15) of said second category of edges being assigned a weight (21 to 24) corresponding to the number of repetitions (21 to 24) of the corresponding succession of patterns (7 to 11) or of the corresponding pattern (11);
- assigning to each node in the graph a weight proportional to the time spent in the function call or succession of calls corresponding to the node concerned;
- analyzing application performance based on the graph and the weights assigned to the nodes and edges.

2. The method according to claim 1, wherein the step of detecting patterns (7 to 11) and successions of patterns (7 to 11) comprises determining from the information collected, for each call (1 to 6) of a communication function, the called function, the receiving process, the sending process, and the time of the call.

3. The method according to claim 2, wherein the determination is carried out as the application is executed.

4. The method according to any one of the preceding claims, wherein the grammar is stored in a memory, and the step of detecting the repetition of patterns (7 to 11) and successions of patterns (7 to 11) is carried out by browsing the grammar once execution of the application has ended.

5. The method according to claim 2, wherein the step of collecting information comprises a step of generating a log file that stores, for each call (1 to 6) of a communication function and in order according to the time of the call, the called function, the receiving process, the sending process, and the determining of the called function, receiving process, sending process, and/or time of the call is carried out in the log file, once the execution of the application has ended.

6. The method according to any of the preceding claims, wherein each pattern (7 to 11) is identified by the name of the first function called in this pattern (7 to 11), and each succession of patterns (7 to 11) is identified by the name of the first function called in the first pattern (7 to 11) of this succession of patterns (7 to 11).

7. A computer system for analyzing the performance of an application making calls (1 to 6) to communication functions between a plurality of processes, the system comprising a processor and a memory, said memory comprising program instructions which, when executed by said processor, cause said system to implement the method according to any one of the preceding claims.
